# EUROPÄISCHE PATENTANMELDUNG

(11) **EP 1 363 150 A1**
(43) Veröffentlichungstag der Anmeldung: **19.11.2003**
(21) Anmeldenummer: 02360148.7
(22) Anmeldetag: 13.05.2002
(51) Int. Cl.: G02B 6/50

(54) **Verfahren zum Verlegen von Kabeln sowie Informationsnetz und Betrieb eines Informationsnetzes**

(71) Anmelder: ALCATEL, 75008 Paris (FR)
(72) Erfinder: Nothofer, Klaus, 40699 Erkrath (DE)
(74) Vertreter: Rausch, Gabriele, Dr.

(57) **Zusammenfassung**

Es wird ein Verlegeverfahren für Kabel vorgeschlagen, das aus einem Rohr und darin einbringbaren elektrischen und/oder optischen Informationskabeln besteht. Die Kabel werden in Nuten eines Verlegegrundes, der dem Verlauf eines Wegenetzes folgt, verlegt.

## Beschreibung

Die vorliegende Erfindung geht aus von einem Verfahren zur Verlegung von Kabeln bestehend aus einem Rohr und darin einbringbaren elektrischen und/oder optischen Informationskabeln in Nuten eines Verlegegrundes, der dem Verlauf eines Wegenetzes folgt. Weiterhin geht die Erfindung von einem Informationsnetz aus, das auf Informationskabeln basiert, die entlang eines Wegenetzes als Verlegegrund verlegt sind.

Verfahren zum Verlegen von Kabeln mit optischen und elektrischen Informationskabeln in Nuten von festen Verlegegründen sind bekannt. Dabei handelt es sich um Verlegeverfahren in Trassen von Straßen. Beispielsweise wird in der Deutschen Offenlegungsschrift DE 197 15 213 ein Verfahren zum Verlegen von Kabeln beschrieben, wobei ein Rohr und darin lose angebrachte optische Informationskabel in Nuten eines festen Verlegegrundes verlegt werden. Das zugrundeliegende Problem ist, dass bei Verlegen von Kabeln in Nuten die Gefahr der Verletzung eines bereits verlegten Informationssystems besteht. Daher schlägt die DE 197 15 213 das Verlegen von Kabeln entlang von Trassen vor, wobei die Kabel verschiedener Informationssysteme in verschiedenen Verlegehöhen eingelegt und geführt werden. Dadurch wird zwar die Gefahr einer Verletzung an dem bereits verlegten Informationssystems reduziert allerdings nicht ausgeschlossen. Besonders in Fällen in dem eine Vielzahl von Betreibern von Informationssystemen ihre Informationskabel verlegen möchten, bietet das bekannte Verfahren keine Lösung. Es wird daher vorgeschlagen ein oder mehrere Leerrohre entlang des Wegenetzes zu verlegen, wobei die Leerrohre aus Stahl bestehen. Das Verwenden von Stahlrohren als Leerrohr entlang des Wegenetzes hat den Vorteil der hohen Stabilität und des optimalen Schutzes gegen Verletzung des einzubringenden Informationskabels. Der Stahlmantel schützt die eingezogenen Kabel zudem gegen Einwirkungen von Feuer, das gerade entlang von Straßen durch brennende Fahrzeuge und auslaufendes Benzin nach Unfällen ein Risiko darstellt. Besonders vorteilhaft und besonders stabil ist die Verwendung eines gewellten Stahlrohres, das durch seine geometrische Form hohe Querstabilität und Druckstabilität aufweist. Damit ist ein besonderer Schutz des Kabels auch gegen Deformation der Oberfläche des Verlegegrundes gegeben, wie sie zum Beispiel durch Frost oder sommerliche Hitze entstehen. Das gewellte Stahlrohr hat zudem den Vorteil, dass es sich leicht biegen lässt und die offene Enden mit angepassten gewellten Stopfen durch Eindrehen leicht verschlossen werden können. Vorteilhafterweise ist das Stahlrohr mit Muffen versehen, wobei über diese Muffen Gebäude- und Häuserkomplexe an das Informationsnetz angeschlossen werden können.

Das erfindungsgemäße Verfahren weist den Vorteil auf, dass nach einmaligem Verlegen der Leerrohrinfrastruktur das erstmalige Einbringen sowie das Einbringen weiterer Informationskabel durch Einziehen, Einblasen oder Einschieben auf einfache Weise erfolgen kann. Gerade die Möglichkeit des zusätzlichen Einbringens weiterer Informationskabel erlaubt einen hohen Freiheitsgrad bei einem zusätzlichen Ausbau von Kabelnetzen durch Anbieter weiterer Serviceleistungen. Ein solches Informationsnetz, das auf verlegten Stahlrohren basiert, ist ohne großen Aufwand realisierbar. Weitere Gebäudeanschlüsse können über Integrierung von Muffen als neue Abzweige installiert werden.

Vorteilhafte Ausführungen und Lösungen sind in den nachfolgenden Figuren dargestellt und werden in der Beschreibung näher erläutert.
- Figur 1: zeigt eine Installation von Lehrrohren
- Figur 2: Querschnitt einer Straßenoberfläche mit Lehrrohr
- Figur 3: Schritte des Verlegeverfahrens
- Figur 4: Halterung der Lehrrohre in der Nut
- Figur 5: weitere Halterung in der Nut
- Figur 6: gewähltes Stahlrohr mit angepasstem Kunststoffstopfen

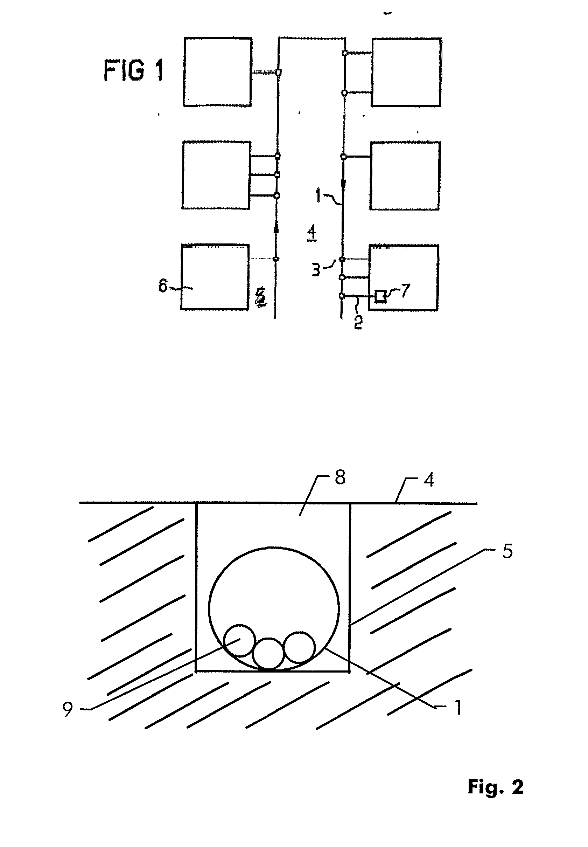

Figur 1 zeigt in einer Draufsicht ein Netz von Lehrrohren, die in einem Verlegeuntergrund eingebracht sind. Die Trasse der Stahlrohre folgt einer Straße 4. In diesem Beispiel sind die Lehrrohre entlang der Straßenränder verlegt. Die Lehrrohre 1 weisen Muffen 3 auf über die Abzweige 2 zu den anliegenden Häuserblocks 6 führen. In den Häusern sind Teilnehmeranschlüsse 7 vorhanden, an denen die Lehrrohre enden. In diesem Beispiel ist eine Verlegung entlang der Straßenränder gewählt. Es ist auch eine Verlegung entlang von Gehwegen oder entlang der Straßenmitte vorteilhaft.
Figur 2 zeigt im Querschnitt ein verlegtes Lehrrohr 1. Das Lehrrohr ist in einer Nut 5 in der Straße 4 eingelegt. Das Lehrrohr 1 enthält beispielhaft drei Informationskabel 9. Das Lehrrohr 1 wird von Verfüllmaterial 8 bedeckt.

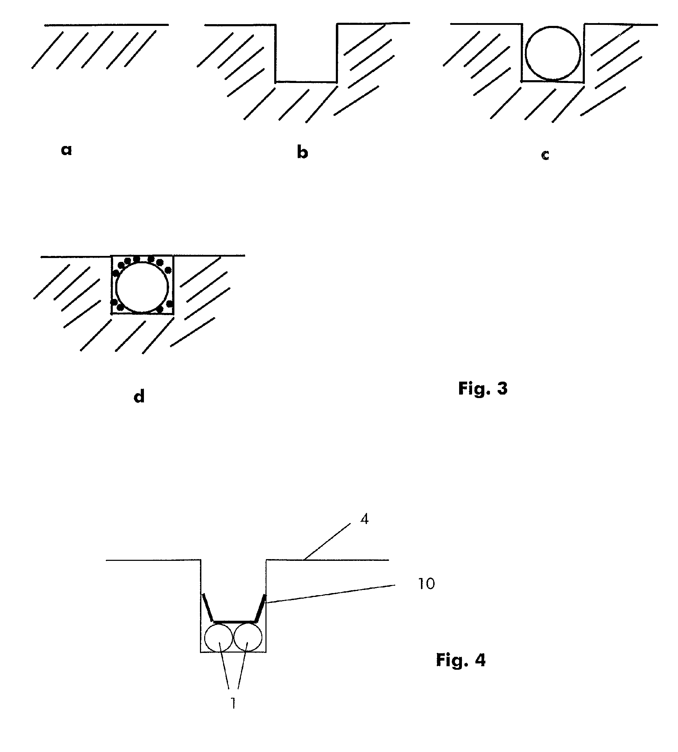

Figur 3 zeigt schematisch das Verlegeverfahren des Lehrrohres auf. Beginnend von einer normalen Straßen- oder Gehwegoberfläche wird mit einer konventionellen Fräse eine Nut 5 in die Oberfläche gefräst. In die gefräste Nut 5 wird das Lehrrohr 1 eingelegt. Nach dem Einlegen des Lehrrohres wird die Nut mit Füllmaterial verfüllt. Als Füllmaterial dient dabei ein elastisches Material, wie Betonbitumen oder ein Epoxydharz. Ein weiteres geeignetes Füllmaterial wird in der deutschen Offenlegung 197 26 880 beschreiben, es handelt sich um eine Füllmasse mit wasserabweisendem und abdichtendem Grundmaterial sowie einem Granulat, das zum Erhalt der flexiblem Eigenschaften beigemischt wird. Die Füllmasse hat die Aufgabe das Lehrrohr vor mechanischen Einflüssen zu schützen, muss aber elastisch genug sein, um Druckbelastungen nicht direkt an das Lehrrohr zu übertragen. Das in Figur 3 prinzipiell dargestellte Verfahren wird verbessert, wenn die gefräste Nut vor Verlegen des Lehrrohres gereinigt wird. Das Entfernen von losen Gesteinspartikeln erleichtert das Verlegen der Lehrrohre. Die Nut wird zu diesem Zweck abgesaugt oder ausgekehrt.
Weiterhin ist es vorteilhaft das Lehrrohr mit Klammern oder Clipsen vor dem Verfüllen mit elastischem Verfüllmaterial zu fixieren.

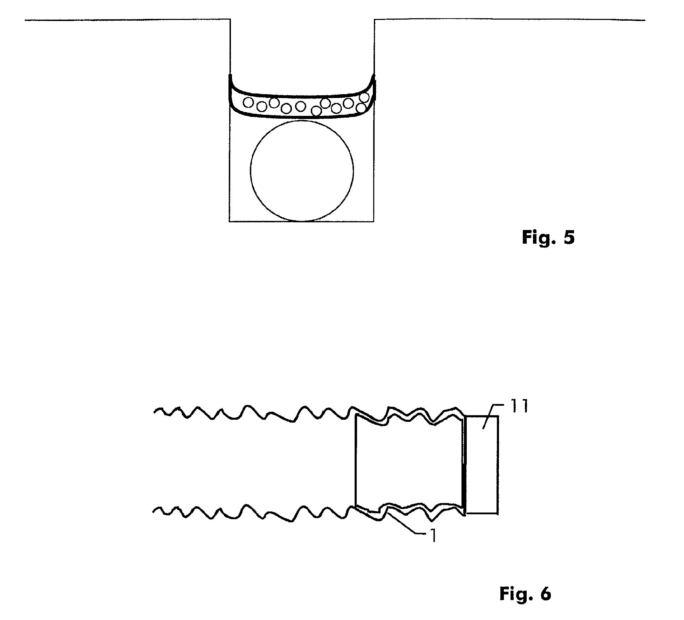

Figur 4 zeigt schematisch zwei eingelegte Lehrrohre 1, fixiert durch einen Clip 10. Durch die Benutzung von Halterungen ist es möglich, das Lehrrohr vor dem Vergießen der Nut zu fixieren. Dadurch wird sichergestellt, dass das Leerrohr während der Verlegearbeiten und vor dem Vergießen an seinem bestimmungsgemäßen Ort in der Nut verbleibt.
Eine weitere vorteilhafte Ausführungsform der Verlegung ist in Figur 5 dargestellt. Hier ist das Beispiel einer kontinuierlichen Abdeckung des Leerrohres mit einem elastischen Streifen aus geschäumtem Kunsstoff zu sehen. Durch die Installation eines Lehrrohres unter einem Schaumstoffstreifen erhält man eine Fixierung des Lehrrohres und gleichzeitig eine elastische Einbettung in die Nut.
Figur 6 zeigt eine vorteilhafte Ausführungsform des Lehrrohres. Ein gewelltes Stahlrohr weist eine besonders hohe Stabilität bei gleichzeitig hervorragender Biegbarkeit auf. Ein gewelltes Stahlrohr hat zudem den Vorteil, dass offene Enden auf einfache Weise durch einen ebenfalls strukturierten Kunststoffstopfen verschlossen werden können. Ein solcher Stopfen 11 wird dabei am offenen Ende des gewellten Stahlrohres eingedreht. Ebenso leicht ist die Installation von Abzweigen, für die Muffen auf vergleichbare Weise in das gewellte Stahlrohr eingedreht werden. Über die Abzweige werden die Anschlüsse an Gebäudeblöcke oder einzelne Gebäude gelegt. Dabei können bereits Lehrrohre bis ins Gebäudeinnere an einen Hausanschluss gelegt werden. Dazu werden die Gebäudewände mit einem konventionellen Bohrgerät durchbohrt und das Stahlrohr als Lehrrohr verlegt. Selbst eine nachträgliche Installation eines Abzweigs ist bei der Benutzung eines Stahllehrrohrs einfach. In das Stahlrohr wird eine geeignete Öffnung geschnitten, an die eine Muffe auf geeignete Weise angebracht wird. Um ein nachträgliches Öffnen des Lehrrohres zu vermeiden kann ein Installationsnetz aufgebaut werden, bei dem in regelmäßigen Abständen Abzweige mit bereits eingebauten Muffen vorgesehen sind. Diese Abzweige können dabei zunächst im "Nichts" enden. Von diesen Verteilpunkten aus ist dann eine Weiterverteilung von Informationskabeln auf einfache Weise möglich. Nach der Installation der Stahlrohre als Lehrrohre entlang eines Wegenetzes erfolgt gegebenenfalls die Erstinstallation der Informationskabel. Dabei werden bekannte Verlegeverfahren wie das Einblasen von Kabeln in Lehrrohren verwendet. Um die Erstinstallation zu erleichtern ist das Verlegen eines Lehrrohres mit einem eingelegten Ziehfaden vorteilhaft. Verlegt man in einem System von Lehrrohren bereits mehrere Ziehfäden ist die nachträgliche Installation von zusätzlichen Informationskabeln erleichtert. Die Art der verlegbaren Kabel ist bei Verwendung des Stahllehrrohres nicht eingeschränkt. Das Stahllehrrohr weist hinreichenden Schutz vor Druck- und Temperaturbelastung auf. Zudem schützt es die eingebrachten Kabel vor Wassereinflüssen. Das Stahlrohr weist weiterhin ausreichend gute elektrische Eigenschaften auf, um auch hier Störungen zu minimieren. Gleichzeitig ist das Stahlrohr Schirmung für Kabel mit elektrische Leckagen.

## Patentansprüche

1. Kabelanlage, bestehend aus einem Rohrsystem, welches entlang eines Wegenetzes als Verlegegrund verlegt ist, und darin verlegten Kabeln, **dadurch gekennzeichnet, dass** die Kabelrohre als gewellte Stahlrohre ausgeführt sind und dass ein oder mehrere Kabelrohre in Nuten eingelegt sind, welche sich an in der Oberfläche des Verlegegrundes befinden, wobei die Nut-Tiefe kleiner ist als die Nutzschicht des Verlegegrundes und die Nuten mit den inliegenden Kabelrohren mit einer Vergußmasse gefüllt sind.

2. Verfahren zum Verlegen von Kabeln nach Anspruch 1, bestehend aus einer Rohranlage und darin einbringbare, elektrische und/oder optische Informationskabel, mit folgenden Schritten:
Fräsen oder Sägen von Nuten in den Verlegeuntergrund
Verlegen eines Leerrohres oder mehrerer Rohre aus Stahl in der Nut
Verfüllen der Nut mit einer Vergußmasse

3. Verfahren nach Anspruch 2 mit den zusätzlichen Schritten:
Reinigen der Nut im Verlegegrund
Fixieren der Leerrohre mit Fixiermitteln.

4. Verfahren nach Anspruch 2, wobei offene Enden der Leerrohre mit Stopfen verschlossen werden.

5. Verfahren nach Anspruch 4, wobei die Stopfen an einem Ende schraubenförmig so ausgebildet sind, dass ein Einschrauben in das gewellte Stahlrohr ermöglicht wird.

6. Verfahren nach Anspruch 2, wobei Gebäude mit Abzweigen angeschlossen werden.

7. Verfahren nach Anspruch 2, wobei das Einbringen der Informationskabeln durch Einziehen, Einblasen oder Einschieben erfolgt.

8. Betrieb eines Informationsnetzes nach Anspruch 1.

9. Verfahren nach Anspruch 6, wobei die Abzweige durch Verbindungsstücke gebildet werden, welche zwei oder mehr Stahlwellrohre gleichen oder unterschiedlichen Durchmessers miteinander verbinden.

10. Verfahren nach Anspruch 9, wobei die Verbindungen als Schraubverbindungen ausgeführt sind

11. Verfahren nach Anspruch 9, wobei die Verbindungen als Klemmverbindungen ausgeführt sind.

12. Kabelrohr nach Anspruch 1, wobei das gewellte Stahlrohr aus Edelstahl der Reihen V2A oder V4A besteht.

13. Verfahren nach Anspruch 2, wobei die Vergussmasse aus Bitumen besteht.

14. Verfahren nach Anspruch 2, wobei die Vergussmasse Asphalt ist.

15. Verfahren nach Anspruch 2, wobei die Vergussmasse Beton ist

16. Verfahren nach Anspruch 2, wobei die Vergussmasse ein Epoxidharz ist.
